# FASCICULE DE BREVET EUROPEEN

(11) **EP 0 629 484 B1**
(45) Date de publication et mention de la délivrance du brevet: **10.09.1997**
(21) Numéro de dépôt: 94401370.5
(22) Date de dépôt: 17.06.1994
(51) Int. Cl.: B29C 49/58

(54) **Procédé et agencement pour positionner un récipient ou une préforme de récipient avec une orientation angulaire prédéterminée sur un mandrin de support**
Verfahren und Anordnung zum Positionieren eines Behälters oder einer Vorform eines Behälters mit einer vorherbestimmten Winkellage auf einem Haltedorn
Method and arrangement for positioning a container or a preform of a container with a predetermined angular orientation onto a support mandrel

(30) Priorité: 21.06.1993 FR 9307473
(43) Date de publication de la demande: 21.12.1994
(73) Titulaire: SIDEL, F- 76053 Le Havre Cedex (FR)
(72) Inventeur: Valles, Thierry, F-76600 Le Havre (FR)
(74) Mandataire: Gorrée, Jean-Michel

(56) Documents cités:
- DE-B- 1 164 312
- FR-A- 2 565 559

## Description

La présente invention vise à proposer des moyens - procédé et agencement- permettant de positionner un récipient ou une préforme de récipient en matière thermoplastique, ayant un goulot à paroi intérieure sensiblement cylindrique de révolution, avec une orientation angulaire prédéterminée sur un mandrin de support introduit à l'intérieur dudit goulot, le mandrin comportant un corps de mandrin muni de moyens de retenue aptes à coopérer positivement avec le goulot pour solidariser celui-ci au corps de mandrin.

Un tel procédé et un tel agencement sont connus du document DE-B-1164312, selon lequel une butée fixe solidaire du mandrin est amenée par rotation relative entre le récipient et le mandrin à porter contre l'extrémité du filet de vis du goulot.

La nécessité d'un positionnement angulaire prédéterminé d'un récipient tel qu'une bouteille ou un flacon ou d'une préforme de récipient peut se présenter à différents stades du processus de fabrication du récipient à partir d'une préforme ou bien d'un processus de traitement d'un récipient déjà formé.

Pour fixer les idées, un exemple courant, bien entendu non limitatif, concerne les flacons à corps plat, du type employé fréquemment pour certains produits ménagers de nettoyage, qui sont équipés d'un dispositif pulvérisateur à gachette vissé sur le goulot : il est alors souhaitable, pour réduire l'encombrement, que le dispositif pulvérisateur soit disposé sur le goulot de manière à s'étendre parallèlement à la plus grande dimension du corps du récipient. Il en résulte la nécessité, au cours de la fabrication du corps du récipient (par soufflage ou étirage-soufflage d'une préforme cylindrique de révolution), que la direction de la déformation la plus importante du corps de la préforme d'origine (et conduisant à la plus grande dimension du corps aplati du récipient définitif) soit positionnée angulairement de façon précise par rapport à l'origine du filet de vissage du goulot (lequel goulot est à ses dimensions définitives dès la fabrication par moulage par injection de la préforme). Dans cette optique, on est donc conduit à positionner angulairement de façon précise et prédéterminée la préforme sur le mandrin appelé à la supporter.

L'invention a donc essentiellement pour objet de proposer des moyens -procédé et agencement- permettant de conférer à un récipient ou à une préforme de récipient le positionnement angulaire prédéterminé requis sur un mandrin de support, de préférence en s'efforçant à ce que, dans toute la mesure du possible, les moyens en question n'entraînent que des modifications minimales dans les machines afin qu'éventuellement des machines déjà existantes puissent être aisément équipées des moyens de l'invention.

A ces fins, selon un premier de ses aspects, l'invention propose un procédé pour positionner un récipient ou une préforme de récipient en matière thermoplastique, ayant un goulot à paroi intérieure sensiblement cylindrique de révolution, avec une orientation angulaire prédéterminée sur un mandrin de support introduit à l'intérieur dudit goulot, le mandrin comportant un corps de mandrin muni de moyens de retenue aptes à coopérer positivement avec le goulot pour solidariser celui-ci au corps de mandrin, selon lequel:
- lesdits moyens de retenue sont montés à rotation folle sur le corps du mandrin de manière que le goulot soit solidarisé axialement au corps de mandrin, mais libre en rotation sur celui-ci,
- on prévoit une butée fixe saillant radialement sur le corps du mandrin qui est disposée en un emplacement de celui-ci ayant une orientation angulaire prédéterminée et qui est située, en partie au moins, en regard d'une portion axiale donnée de la paroi interne d'un goulot monté sur le mandrin et retenu sur celui-ci par les susdits moyens de retenue,
- on prévoit une saillie radiale disposée, en partie au moins, en un emplacement prédéterminé angulairement de la susdite portion axiale de la paroi interne du goulot, et
- on provoque un mouvement de rotation relatif entre le récipient ou la préforme solidaire des moyens de retenue et le corps du mandrin jusqu'à ce que la saillie radiale du goulot vienne porter contre la butée radiale fixe du corps du mandrin, ce grâce à quoi le récipient ou la préforme est alors amené et retenu sur le mandrin avec une orientation angulaire prédéterminée par rapport au corps du mandrin.

Dans le cas courant d'une installation de fabrication ou de traitement de récipients au défilé dans laquelle chaque mandrin est mobile et déplacé parallèlement à lui-même (chaîne de transfert) en même temps qu'il est animé d'une rotation sur lui-même, on prévoit avantageusement selon l'invention que, une fois les moyens de retenue engagés positivement avec le goulot, on freine le mouvement de rotation du goulot sur lui-même en laissant le corps de mandrin libre de son mouvement de rotation sur lui-même pour obtenir le susdit mouvement de rotation relatif amenant la saillie radiale du goulot en appui contre la butée radiale fixe du corps de mandrin.

Dans un mode de mise en oeuvre particulièrement intéressant, les moyens de retenue sont constitués par une bague fendue élastiquement déformable radialement, qui est engagée à libre rotation dans une gorge annulaire creusée dans le corps du mandrin. Une telle bague fendue est en général déjà présente sur les mandrins des installations existant actuellement et sert de moyen de blocage pour solidariser le goulot -et le récipient ou la préforme - au mandrin. Toutefois, dans les installations actuelles, la bague est bloquée en rotation (par exemple par la présence d'une clavette dans la gorge de retenue) afin que le récipient ou la préforme soit solidarisé au mandrin aussi bien axialement qu'en rotation. Dans ces conditions, la mise en oeuvre du procédé de l'invention -qu'il s'agisse de la fabrication de nouvelles machines ou d'un aménagement de machines déjà existantes -s'effectue de façon techniquement simple en libérant la bague élastique et en prévoyant une butée fixe en un emplacement choisi du corps du mandrin.

Selon un second de ses aspects, l'invention propose un agencement pour positionner un récipient ou une préforme de récipient en matière thermoplastique, ayant un goulot à paroi intérieure sensiblement cylindrique de révolution, avec une orientation angulaire prédéterminée sur un mandrin de support introduit à l'intérieur dudit goulot, le mandrin comportant un corps de mandrin muni de moyens de retenue aptes à coopérer positivement avec le goulot pour solidariser celui-ci au corps de mandrin, selon lequel:
- lesdits moyens de retenue sont montés à rotation folle sur le corps du mandrin de manière que le goulot soit retenu axialement sur le corps de mandrin, mais libre de tourner sur celui-ci ;
- une butée fixe fait saillie radialement sur le corps de mandrin, en un emplacement de celui-ci ayant une orientation angulaire prédéterminée et, au moins en partie, en regard d'une portion axiale donnée de la paroi interne d'un goulot monté sur le mandrin et retenu sur celui-ci par les susdits moyens de retenue ;
- une saillie radiale est disposée, en partie au moins, en un emplacement prédéterminé angulairement de la susdite portion axiale de la paroi interne du goulot ; et
- des moyens sont aptes à provoquer un mouvement relatif de rotation entre le récipient ou la préforme de récipient retenu par les moyens de retenue et le corps du mandrin de manière à amener la saillie radiale du goulot en appui contre la butée radiale du corps du mandrin, ce grâce à quoi le récipient ou la préforme de récipient peut être retenu sur le mandrin avec une orientation angulaire prédéterminée par rapport au corps du mandrin.

De préférence, dans une installation de fabrication ou de traitement de récipients au défilé dans laquelle chaque mandrin est mobile et déplacé en translation parallèlement à lui-même en même temps qu'il est mis en rotation sur lui-même, on prévoit que les susdits moyens aptes à provoquer un mouvement relatif de rotation entre le récipient ou la préforme de récipient et le corps de mandrin sont constitués sous forme de moyens de friction (par exemple un patin de friction disposé dans l'installation latéralement et en bordure de la trajectoire suivie par la préforme ou le récipient) aptes à frotter sur le récipient ou la préforme de récipient pour freiner le mouvement de rotation de celui-ci tandis que le corps de mandrin continue à être entraîné librement en rotation.

Très avantageusement, les moyens de retenue comprennent une bague fendue, élastiquement déformable radialement, retenue à libre rotation dans une gorge annulaire du corps de mandrin.

Dans un mode de réalisation préféré, la saillie radiale du goulot est conformée sous forme d'une nervure s'étendant longitudinalement sur la paroi interne du goulot et la butée fixe du corps de mandrin est disposée de manière à coopérer avec l'extrémité de ladite nervure la plus proche de l'orifice du goulot. Avantageusement dans ce cas, pour obtenir un bon centrage du mandrin introduit dans le goulot, la paroi interne du goulot est pourvue de plusieurs nervures longitudinales saillant radialement, une particulière de ces nervures a une longueur supérieure à la longueur de l'autre ou des autres nervures en direction de l'orifice du goulot et la butée fixe du corps du mandrin est située en regard de la partie plus longue de ladite nervure particulière ; on fait alors en sorte que la butée fixe du corps du mandrin soit située sur la partie du corps de mandrin qui est, par rapport à la gorge de réception de la bague folle, opposée à l'extrémité libre du mandrin.

Pour être assuré du centrage recherché du mandrin introduit à l'intérieur du goulot, les nervures sont au nombre d'au moins trois et, de façon souhaitable, elles sont régulièrement espacées les unes des autres.

La présente invention définit également un récipient et une préforme de récipient, un mandrin, ainsi qu'une installation de transport de préformes ou de récipient, agencés en vue de la mise en oeuvre du procédé revendiqué.

L'invention sera mieux comprise à la lecture de la description détaillée qui suit d'un de ses modes de réalisation préféré, donné uniquement à titre d'exemple non limitatif. Dans cette description, on se réfère aux dessins annexés sur lesquels :
- les figures 1 et 2 sont des vues respectivement de côté et de dessus d'un goulot de récipient ou de préforme agencé conformément à l'invention ;
- la figure 3 est une vue en perspective d'un mandrin agencé conformément à l'invention ; et
- la figure 4 est une vue de côté, en coupe, illustant le positionnement angulaire prédéterminé du goulot des figures 1 et 2 sur le mandrin de la figure 3.

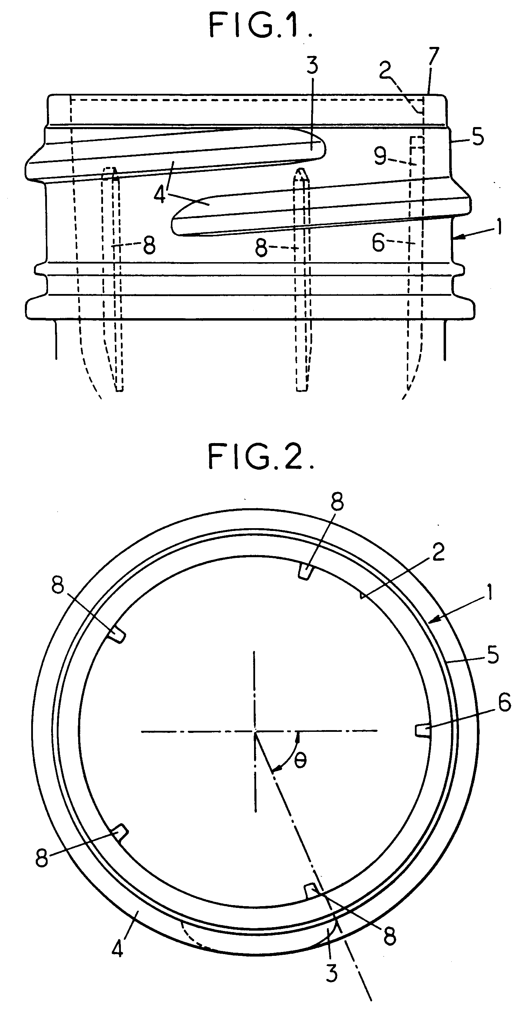

En se référant tout d'abord aux figures 1 et 2, un goulot 1 d'un récipient (flacon, bouteille,...) ou d'une préforme de récipient en matière thermoplastique présente une paroi interne 2 sensiblement cylindrique de révolution.

En un emplacement prédéterminé (par exemple, pour illustrer ce qui a été expliqué plus haut, à une distance angulaire prédéterminée θ de l'amorce 3 d'un filet de vis 4 prévu sur la paroi externe 5 du goulot 1 pour recevoir ultérieurement un bouchon ou un accessoire vissable) de la paroi interne 2 est prévue une saillie radiale 6 qui avantageusement se présente sous forme d'une nervure s'étendant sensiblement parallèlement à l'axe du goulot. Son épaisseur radiale peut être relativement faible (par exemple 0,8 mm) et elle s'étend jusqu'à faible distance (par exemple 2,5 mm) du bord de l'orifice du goulot.

Pour obtenir un bon centrage du mandrin de support - dont question plus loin- devant être introduit dans le goulot 1, on prévoit d'autres saillies 8, également en forme de nervures, réparties sur le pourtour de la paroi interne 2. Pour assurer le centrage requis, les nervures 6 et 8 sont au total au nombre d'au moins trois (cinq dans l'exemple représenté aux fig. 1 et 2), régulièrement écartées les unes des autres. On notera toutefois que les nervures 8 sont plus courtes que la première nervure ou nervure particulière 6 et leur extrémité supérieure est située à une distance plus importante (par exemple 4,5 mm) du bord 7 de l'orifice du goulot.

Dans cet agencement, la nervure particulière 6 présente une partie terminale 9 qui, seule, est située dans une portion axiale donnée de la paroi interne du goulot et dont le rôle sera explicité plus loin.

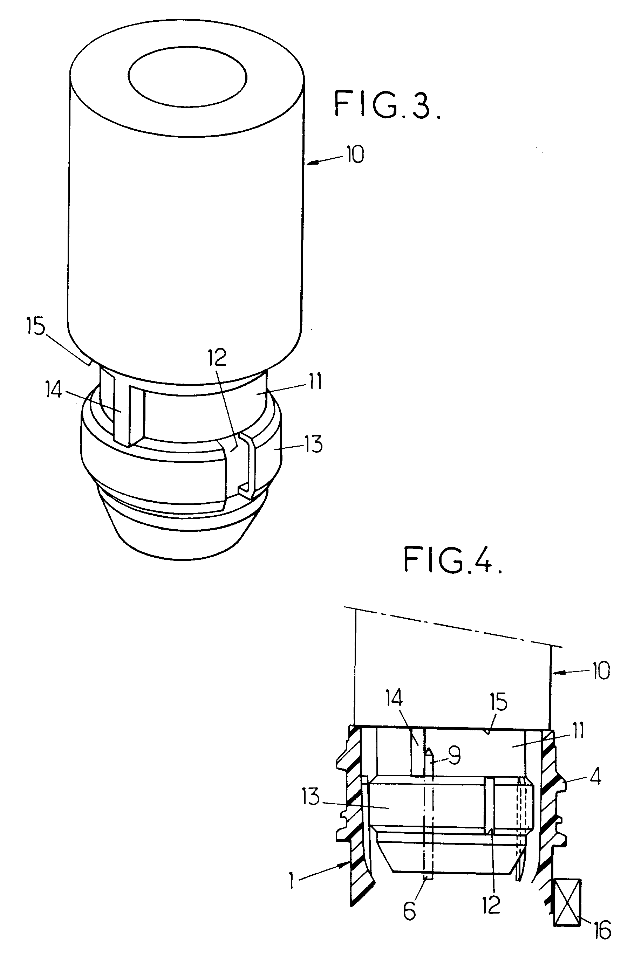

La figure 3 représente un mandrin 10 qui comporte un corps de mandrin 11 muni d'une gorge annulaire 12 à l'intérieur de laquelle est logée à rotation folle une bague fendue 13 déformable élastiquement dans le sens radial ; le diamètre externe de cette bague non déformée est sensiblement supérieur au diamètre externe du corps de mandrin 11 et au diamètre interne du goulot 1, le diamètre externe du corps de mandrin 11 étant quant à lui sensiblement identique ou peu inférieur au diamètre interne du goulot 1.

En un emplacement prédéterminé angulairement du corps de mandrin 11 et au moins dans une portion axiale prédéterminée du corps de mandrin, en l'occurence au-dessus (sur la fig. 3) de la gorge 12 (c'est-à-dire sur la partie du corps de mandrin située, par rapport à la gorge 12, à l'opposé de l'extrémité libre du corps de mandrin), est prévue une butée 14 saillant radialement.

Dans le cas pratique d'une installation de fabrication ou de traitement de récipients au défilé, il est prévu une chaîne de transfert équipée d'une multiplicité de mandrins, chaque mandrin étant déplacé en translation parallèlement à lui-même en même temps qu'il est animé d'un mouvement de rotation sur lui-même. Tous ces moyens connus ne sont pas montrés à la figure 3.

La figure 4 montre le mandrin 10 introduit à l'intérieur du goulot 1 (en pratique, le récipient ou la préforme est présentée sous le mandrin qui s'abaisse pour être introduit dans le goulot - opération de "vétissage") jusqu'à ce que le bord 7 de l'orifice du goulot 1 vienne en butée axiale contre un épaulement annulaire 15 du corps du mandrin 10. La bague déformable 13 prend appui sur les nervures longitudinales 6 et 8 et retient ainsi le goulot 1 sur le mandrin 10 en position centrée. La butée 14 du corps de mandrin et la partie supérieure 9 de la nervure particulière 6 du goulot 1 se trouvent alors dans des portions axiales respectives de la surface externe du corps du mandrin et de la surface interne du goulot qui sont sensiblement au même niveau et qui se font mutuellement face.

Il est ensuite aisé de faire tourner le récipient ou la préforme 1 autour du corps de mandrin 11, puisque le seul organe intermédiaire assurant leur solidarisation axiale est la bague 13 qui peut tourner folle dans sa gorge de retenue 12. Cette rotation s'effectue jusqu'à ce que la partie supérieure 9 de la nervure particulière 6 vienne porter contre la butée 14 du corps de mandrin 11, comme représenté à la figure 4. La préforme ou le récipient 1 se trouve alors disposé dans une position angulaire prédéterminée par rapport au corps de mandrin 11, et donc par rapport au reste de l'installation au sein de laquelle le mandrin 10 a en permanence une position connue grâce à des moyens d'indexation de position angulaire en soi connus.

En pratique, dans une chaîne de transfert comportant une multiplicité de mandrins successifs, la rotation relative du récipient ou de la préforme par rapport au corps de mandrin peut être obtenue de façon simple en freinant le récipient au cours de l'avance de la chaîne de transfert : on peut à cet effet prévoir par exemple un patin de friction 16 disposé latéralement et apte à frotter sur toute partie appropriée du corps ou du goulot de la préforme ou du récipient.

On conçoit que les moyens mis en oeuvre dans le cadre de la présente invention sont techniquement simples et ne requièrent qu'une adaptation minime des mandrins déjà existants ainsi que la mise en place d'un patin de freinage, toutes modifications qui peuvent non seulement concerner des installations neuves, mais aussi être apportées sans difficultés dans des installations déjà existantes.

Comme il va de soi et comme il résulte d'ailleurs déjà de ce qui précède, l'invention ne se limite nullement à ceux de ses modes d'application et de réalisation qui ont été plus particulièrement envisagés ; elle en embrasse, au contraire, toutes les variantes dans le cadre défini par les revendications.

## Revendications

1. Procédé pour positionner un récipient ou une préforme de récipient en matière thermoplastique, ayant un goulot (1) à paroi intérieure (2) sensiblement cylindrique de révolution, avec une orientation angulaire prédéterminée sur un mandrin de support (10) introduit à l'intérieur dudit goulot (1), le mandrin (10) comportant un corps de mandrin (11) muni de moyens de retenue (13) aptes à coopérer positivement avec le goulot pour solidariser celui-ci au corps de mandrin, selon lequel :
- lesdits moyens de retenue (13) sont montés à rotation folle sur le corps (11) du mandrin de manière que le goulot (1) soit solidarisé axialement au corps de mandrin, mais libre en rotation sur celui-ci,
- on prévoit une butée fixe (14) saillant radialement sur le corps du mandrin qui est disposée en un emplacement de celui-ci ayant une orientation angulaire prédéterminée et qui est située, en partie au moins, en regard d'une portion axiale donnée de la paroi interne d'un goulot monté sur le mandrin et retenu sur celui-ci par les susdits moyens de retenue,
- on prévoit une saillie radiale (9) disposée, en partie au moins, en un emplacement prédéterminé angulairement de la susdite portion axiale de la paroi interne (2) du goulot, et
- on provoque un mouvement de rotation relatif entre le récipient ou la préforme solidaire des moyens de retenue et le corps du mandrin jusqu'à ce que la saillie radiale du goulot vienne porter contre la butée radiale fixe du corps du mandrin, ce grâce à quoi le récipient ou la préforme est alors amené et retenu sur le mandrin avec une orientation angulaire prédéterminée par rapport au corps du mandrin.

2. Procédé selon la revendication 1, le mandrin étant mobile et déplacé en translation parallèlement à lui-même en même temps qu'il est animé d'une rotation sur lui-même,
caractérisé en ce que, une fois les moyens de retenue (13) engagés positivement avec le goulot (1), on freine (16) le mouvement de rotation du goulot sur lui-même en laissant le corps de mandrin (11) libre de son mouvement de rotation sur lui-même pour obtenir le susdit mouvement de rotation relatif amenant la saillie radiale (6) du goulot en appui contre la butée radiale fixe du corps de mandrin.

3. Procédé selon la revendication 1 ou 2, caractérisé en ce que les moyens de retenue sont constitués par une bague fendue (13) élastiquement déformable radialement, qui est engagée à libre rotation dans une gorge annulaire (12) creusée dans le corps du mandrin (11).

4. Agencement pour positionner un récipient ou une préforme de récipient en matière thermoplastique, ayant un goulot (1) à paroi intérieure (2) sensiblement cylindrique de révolution, avec une orientation angulaire prédéterminée sur un mandrin (10) de support introduit à l'intérieur dudit goulot, le mandrin comportant un corps de mandrin (11) muni de moyens de retenue (13) aptes à coopérer positivement avec le goulot (1) pour solidariser celui-ci au corps de mandrin, selon lequel :
- lesdits moyens de retenue (13) sont montés à rotation folle sur le corps du mandrin (11) de manière que le goulot (1) soit retenu axialement sur le corps de mandrin (11), mais libre de tourner sur celui-ci ;
- une butée fixe (14) fait saillie radialement sur le corps de mandrin (11), en un emplacement de celui-ci ayant une orientation angulaire prédéterminée et, au moins en partie, en regard d'une portion axiale donnée de la paroi interne (2) d'un goulot (1) monté sur le mandrin (10) et retenu sur celui-ci par les susdits moyens de retenue (13) ;
- une saillie radiale (9) est disposée, en partie au moins, en un emplacement prédéterminé angulairement de la susdite portion axiale de la paroi interne (2) du goulot (1); et
- des moyens (16) sont aptes à provoquer un mouvement relatif de rotation entre le récipient ou la préforme de récipient retenu par les moyens de retenue (13) et le corps (11) du mandrin de manière à amener la saillie radiale du goulot (1) en appui contre la butée radiale (14) du corps du mandrin (11), ce grâce à quoi le récipient ou la préforme de récipient peut être retenu sur le mandrin avec une orientation angulaire prédéterminée par rapport au corps du mandrin.

5. Agencement selon la revendication 4, le mandrin étant mobile et déplacé en translation parallèlement à lui-même en même temps qu'il est mis en rotation sur lui-même,
caractérisé en ce que les susdits moyens aptes à provoquer un mouvement relatif de rotation entre le récipient ou la préforme de récipient et le corps de mandrin sont constitués sous forme de moyens de friction (16) aptes à frotter sur le récipient ou la préforme de récipient pour freiner le mouvement de rotation de celui-ci tandis que le corps de mandrin continue à être entraîné librement en rotation.

6. Agencement selon la revendication 4 ou 5, caractérisé en ce que les moyens de retenue comprennent une bague fendue (13), élastiquement déformable radialement, retenue à libre rotation dans une gorge annulaire (12) du corps de mandrin (11).

7. Agencement selon l'une quelconque des revendications 4 à 6, caractérisé en ce que la saillie radiale du goulot est conformée sous forme d'une nervure (6) s'étendant longitudinalement sur la paroi interne du goulot et en ce que la butée fixe (14) du corps de mandrin est disposée de manière à coopérer avec l'extrémité (9) de ladite nervure (6) la plus proche de l'orifice du goulot.

8. Agencement selon la revendication 7, caractérisé en ce que la paroi interne (2) du goulot (1) est pourvue de plusieurs nervures longitudinales (6, 8) saillant radialement, en ce qu'une particulière (6) de ces nervures a une longueur supérieure à la longueur de l'autre ou des autres nervures en direction de l'orifice du goulot et en ce que la butée fixe (14) du corps du mandrin (11) est située en regard de la partie plus longue (9) de ladite nervure particulière (6).

9. Agencement selon les revendications 6 et 8, caractérisé en ce que la butée fixe (14) du corps du mandrin (11) est située sur la partie du corps de mandrin qui est, par rapport à la gorge (12) de réception de la bague folle (13), opposée à l'extrémité libre du mandrin.

10. Agencement selon la revendication 8 ou 9, caractérisé en ce que les nervures (6, 8) sont au nombre d'au moins trois.

11. Agencement selon l'une quelconque des revendications 8 à 10, caractérisé en ce que les nervures (6, 8) sont régulièrement espacées l'une de l'autre.

12. Préforme en matériau thermoplastique prévue pour la fabrication de récipients tels que bouteilles ou flacons, possédant un goulot à paroi interne sensiblement cylindrique de révolution, caractérisée en ce que la paroi interne (2) du goulot (1) comporte une saillie radiale (9) selon l'une quelconque des revendications 4 à 11.

13. Récipient tel que bouteille ou flacon en matériau thermoplastique, muni d'un goulot (1) à paroi interne (2) sensiblement cylindrique de révolution, caractérisé en ce que la paroi interne (2) du goulot (1) comporte une saillie radiale (9) selon l'une quelconque des revendications 4 à 11.

14. Mandrin pour supporter une préforme ou un récipient en matériau thermoplastique selon la revendication 12 ou 13, ledit mandrin (10) comportant un corps de mandrin (11) muni de moyens de retenue (13) aptes à coopérer positivement avec le goulot (1) pour solidariser celui-ci au corps de mandrin (11), caractérisé en ce que les moyens de retenue (13) sont agencés selon l'une quelconque des revendications 4 à 6 et en ce qu'il est pourvu d'une butée fixe (14) agencée selon l'une quelconque des revendications 4 à 11.

15. Installation de transport de préformes ou de récipients en matériau thermoplastique selon la revendication 12 ou 13, équipée d'un ensemble continu mobile, en chaîne sans fin, d'organes de préhension desdites préformes ou récipients qui sont en forme de mandrins (10), caractérisée en ce que lesdits mandrins sont agencés selon la revendication 14.

## Claims

1. A method for positioning a thermoplastic container or container blank having a neck (1) with a substantially cylindrical axisymmetric inside wall (2), with a predetermined angular orientation on a carrier mandrel (10) introduced inside the said neck (1), the mandrel (10) including a mandrel body (11) provided with retaining means (13) capable of interacting positively with the neck to secure the latter to the mandrel body, according to which :
- the said retaining means (13) are mounted freely rotating on the body (11) of the mandrel such that the neck (1) is axially secured to the mandrel body but free to rotate thereon,
- a fixed stop (14) is provided, projecting radially from the body of the mandrel and which is located at a point thereof which has a predetermined angular orientation and which is situated, at least in part, opposite a given axial portion of the internal wall of a neck mounted on the mandrel and retained thereon by the said retaining means,
- a radial projection (9) is provided, located, at least in part, at an angularly predetermined point of the said axial portion of the internal wall (2) of the neck, and
- a relative rotational movement between the container or blanck secured to the retaining means and the body of the mandrel is brought until the radial projection of the neck comes to bear against the fixed radial stop of the mandrel body, whereby the container or blank is brought onto and retained on the mandrel with a predetermined angular orientation with respect to the body of the mandrel.

2. Method according to claim 1, the mandrel being movable and displaced in translation parallel to itself at the same time as it is given a rotation on itself,
characterized in that, once the retaining means (13) have been engaged positively with the neck (1), the rotational movement of the neck on itself is braked (16), leaving the mandrel body (11) free in its rotational movement on itself in order to obtain the said relative rotational movement bringing the radial projection (6) of the neck to bear against the fixed radial stop of the mandrel body.

3. Method according to claim 1 or 2, characterized in that the retaining means consist of a radially elastically deformable split ring (13) which is engaged freely rotating in an annular groove (12) hollowed out from the body of the mandrel (11).

4. An arrangement for positioning a thermoplastic container or container blank having a neck (1) with a substantially cylindrical axisymmetric inside wall (2), with a predetermined angular orientation on a carrier mandrel (10) introduced inside the said neck, the mandrel including a mandrel body (11) provided with retaining means (13) capable of interacting positively with the neck (1) to secure the latter to the mandrel body, according to which :
- the said retaining means (13) are mounted freely rotating on the body of the mandrel (11) such that the neck (1) is axially retained on the mandrel body (11) but free to turn thereon ;
- a fixed stop (14) projects radially from the mandrel body (11), at a point thereon which has a predetermined angular orientation and, at least in part, is opposite a given axial portion of the internal wall (2) of a neck (1) mounted on the mandrel (10) and retained thereon by the said retaining means (13) ;
- a radial projection (9) is located, at least in part, at an angularly predetermined point of the said axial portion of the internal wall (2) of the neck (1) ; and
- means (16) are capable of bringing about a relative rotational movement between the container or container blank retained by the retaining means (13) and the body (11) of the mandrel such as to bring the radial projection of the neck (1) to bear against the radial stop (14) of the mandrel body (11), whereby the container or container blank may be retained on the mandrel with a predetermined angular orientation with respect to the body of the mandrel.

5. Arrangement according to claim 4, the mandrel being movable and displaced in translation parallel to itself at the same time as it is rotated on itself,
characterized in that the said means capable of bringing about a relative rotational movement between the container or container blank and the mandrel body are arranged in the from of friction means (16) capable of rubbing against the container or container blank in order to brake the rotational movement thereof while the mandrel body continues to be driven freely in rotation.

6. Arrangement according to claim 4 or 5, characterized in that the retaining means comprise a radially elastically deformable split ring (13) retained freely rotating in an annular groove (12) of the mandrel body (11).

7. Arrangement according to any one of claims 4 to 6, characterized in that the radial projection of the neck is shaped in the form of a rib (6) extending longitudinally along the internal wall of the neck and in that tht fixed stop (14) of the mandrel body is located such as to interact with the end (9) of the said rib (6) closest to the orifice of the neck.

8. Arrangement according to claim 7, characterized in that the internal wall (2) of the neck (1) is provided with several longitudinal ribs (6, 8) projecting radially, in that a specific one (6) of these ribs has a length greater than the length of the other rib or ribs in the direction of the orifice of the neck and in that the fixed stop (14) of the body of the mandrel (11) is situated opposite the longest part (9) of the said specific rib (6).

9. Arrangement according to claims 6 and 8, characterized in that the fixed stop (14) of the body of the mandrel (11) is situated on that part of the mandrel body which is, with respect to the groove (12) accomodating the freely rotating ring (13), opposite the free end of the mandrel.

10. Arrangement according to claim 8 or 9, characterized in that the ribs (6, 8) are at least three in number.

11. Arrangement according to any one of claims 8 to 10, characterized in that the ribs (6, 8) are uniformly spaced apart.

12. A thermoplactic blank intended for the manufacture of containers such as bottles or flasks, having a neck with a substantially cylindrical axisymmetric internal wall, characterized in that the internal wall (2) of the neck (1) includes a radial projection (9) according to any one of claims 4 to 11.

13. A container such as a thermoplastic bottle or flask, provided with a neck (1) having a substantially cylindrical axisymmetric internal wall (2),
characterized in that the internal wall (2) of the neck (1) includes a radial projection (9) according to any one of claims 4 to 11.

14. A mandrel for carrying a thermoplastic blank or container according to claims 12 or 13, the said mandrel (10) including a mandrel body (11) provided with retaining means (13) capable of interacting positively with the neck (1) to secure the latter to the mandrel body (11),
characterized in that the retaining means (13) are arranged according to any one of claims 4 to 6 and in that it is provided with a fixed stop (14) arranged according to any one of claims 4 to 11.

15. An installation for transporting thermoplastic blanks or containers according to claim 12 or 13, provided with a continuous set, moving as an endless chain, of members for taking hold of the said blanks or containers which are in the form of mandrels (10),
characterized in that said mandrels are arranged according to claim 14.

## Patentansprüche

1. Verfahren zum Positionieren eines Behälters oder einer Vorform eines Behälters aus thermoplastischem Material, der einen Hals (1) mit einer im wesentlichen zylinderförmig umlaufenden Innenwand (2) aufweist, mit einer vorbestimmten Winkellage auf einen in das Innere des Halses (1) eingeführten Haltedorn (10), wobei der Dorn (10) einen Dornkörper (11) umfaßt, der mit Rückhaltemitteln (13) versehen ist, die so ausgebildet sind, daß sie positiv mit dem Hals zusammenwirken, um diesen am Dornkörper festzulegen, gemäß welchem:
- die Rückhaltemittel (13) freidrehend auf dem Körper (11) des Dorns angebracht werden, derart, daß der Hals (1) am Dornkörper zwar axial festgelegt ist, aber um diesen frei drehen kann,
- ein radial von dem Dornkörper vorstehender, fester Anschlag (14) vorgesehen wird, der an einer Stelle desselben in einer vorbestimmten Winkellage angeordnet ist und der wenigstens teilweise in bezug zu einem axialen Abschnitt liegt, der sich von der Innenwand eines auf dem Dorn montierten und auf diesem durch die Rückhaltemittel festgehaltenen Halses ergibt,
- ein radialer Vorsprung (9) vorgesehen wird, der wenigstens teilweise in einer vorbestimmten Winkellage zu dem axialen Abschnitt der Innenwand (2) des Halses angeordnet ist, und
- eine relative Drehbewegung zwischen dem fest mit den Rückhaltemitteln verbundenen Behälter oder Vorformling und dem Dornkörper hervorgerufen wird, bis daß der radiale Vorsprung des Halses zur Anlage an dem festen radialen Anschlag des Dornkörpers kommt, wodurch der Behälter oder der Vorformling auf dem Dorn mit einer vorbestimmten Winkellage gegenüber dem Dornkörper zugeführt und festgehalten wird.

2. Verfahren nach Anspruch 1, wobei der Dorn beweglich und in eigener Parallelverschiebung verstellbar ist, sobald er in eine Drehung um sich selbst versetzt wird,
dadurch gekennzeichnet, daß, sobald die Rückhaltemittel (13) positiv an den Hals (1) angreifen, die Drehbewegung des Halses gebremst (16) wird, wobei der Dornkörper (11) in freier Drehbewegung um sich selbst gehalten wird, um die relative Drehbewegung beizubehalten, die den radialen Vorsprung (6) des Halses in Anlage an den festen radialen Anschlag des Dornkörpers bringt.

3. Verfahren nach Anspruch 1 oder 2, dadurch gekennzeichnet, daß die Rückhaltemittel durch einen in radialer Richtung elastisch verformbaren Spaltring (13) gebildet werden, der in freier Drehung in eine Ringnut (12) eingreift, die in dem Dornkörper (11) ausgebildet ist.

4. Anordnung zum Positionieren eines Behälters oder einer Vorform eines Behälters aus thermoplastischem Material, der einen Hals (1) mit einer im wesentlichen zylinderförmig umlaufenden Innenwand (2) aufweist, mit einer vorbestimmten Winkellage auf einen in das Innere des Halses eingeführten Haltedorn (10), wobei der Dorn einen Dornkörper (11) umfaßt, der mit Rückhaltemitteln (13) versehen ist, die derart ausgebildet sind, daß sie positiv mit dem Hals (1) zusammenwirken, um diesen am Dornkörper festzulegen, gemäß welchem:
- die Rückhaltemittel (13) frei drehend auf dem Dornkörper (11) angebracht sind, derart, daß der Hals (1) auf dem Dornkörper (11) zwar axial festgehalten wird, aber frei auf diesem drehen kann;
- ein fester Anschlag (14) an dem Dornkörper (11) an einer Stelle desselben radial vorspringt, der eine vorbestimmte Winkellage aufweist und wenigstens teilweise in bezug zu einem von der Innenwand (2) eines Halses (1) gegebenen axialen Abschnitts auf dem Dorn (10) angebracht ist und auf diesem durch die Rückhaltemittel (13) festgehalten ist;
- ein radialer Vorsprung (9) wenigstens teilweise in einer vorbestimmten Winkellage des vorgenannten zu dem axialen Abschnitt der Innenwand (2) des Halses (1) angeordnet ist; und
- Mittel (16), die derart ausgebildet sind, daß sie eine relative Drehbewegung zwischen dem durch die Rückhaltemittel (13) zurückgehaltenen Behälter oder Vorformling des Behälters und dem Körper (11) des Dornes herbeiführen, um den radialen Vorsprung des Halses (1) in Anlage an den radialen Anschlag (14) des Dornkörpers (11) zu bringen, wodurch der Behälter oder Vorformling des Behälters auf dem Dorn mit einer gegenüber dem Dornkörper vorbestimmten Winkellage zurückgehalten werden kann.

5. Anordnung nach Anspruch 4, wobei der Dorn beweglich und selbst durch Parallelverschiebung verstellbar ist, sobald dieser um sich selbst in Drehung versetzt ist, dadurch gekennzeichnet, daß die vorgenannten Mittel, die derart ausgebildet sind, daß sie eine relative Drehbewegung zwischen dem Behälter oder dem Vorformling des Behälters und dem Dornkörper herbeiführen, in Form eines Reibungselements (16) ausgebildet sind, das derart angepaßt ist, daß es auf dem Behälter oder dem Vorformling des Behälters reibt, um die Drehbewegung desselben zu bremsen, während der Dornkörper weiterhin frei in Drehung versetzt ist.

6. Anordnung nach Anspruch 4 oder 5, dadurch gekennzeichnet, daß die Rückhaltemittel einen in radialer Richtung elastisch verformbaren Spaltring (13) umfassen, der in freier Drehung in einer Ringnut (12) des Dornkörpers (11) gehalten wird.

7. Anordnung nach einem der Ansprüche 4 bis 6, dadurch gekennzeichnet, daß der radiale Vorsprung des Halses der Form einer Rippe (6) entspricht, die sich in Längsrichtung über die Innenwand des Halses erstreckt, und daß der feste Anschlag (14) des Dornkörpers derart angeordnet ist, daß dieser mit dem der Öffnung des Halses am nächsten liegenden Ende (9) der Rippe (6) zusammenwirkt.

8. Anordnung nach Anspruch 7, dadurch gekennzeichnet, daß die Innenwand (2) des Halses (1) mit mehreren Längsrippen (6, 8) versehen ist, die radial vorspringen, daß eine besondere (6) dieser Rippen in Richtung zur Öffnung des Halses eine größere Länge aufweist als die Länge der anderen Rippe(n) und daß der feste Anschlag (14) des Dornkörper (11) gegenüber dem längeren Abschnitt (9) der besonderen Rippe (6) angeordnet ist.

9. Anordnung nach den Ansprüchen 6 und 8, dadurch gekennzeichnet, daß der feste Anschlag (14) des Dornkörpers (11) auf dem Abschnitt des Dornkörpers angeordnet ist, der, in bezug zu der Aufnahmenut (12) des Spaltringes (13), dem freien Ende des Dornes gegenüberliegt.

10. Anordnung nach Anspruch 8 oder 9, dadurch gekennzeichnet, daß die Anzahl der Rippen (6, 8) wenigstens drei beträgt.

11. Anordnung nach einem der Ansprüche 8 bis 10, dadurch gekennzeichnet, daß die Rippen (6, 8) in regelmäßigem Abstand voneinander angeordnet sind.

12. Vorformling aus thermoplastischem Material zur Herstellung von Behältern, wie Flaschen oder Flakons, der einen Hals mit einer im wesentlichen zylinderförmig umlaufenden Innenwand besitzt, dadurch gekennzeichnet, daß die Innenwand (2) des Halses (1) einen radialen Vorsprung (9) gemäß einem der Ansprüche 4 bis 11 umfaßt.

13. Behälter, wie eine Flasche oder ein Flakon, aus thermoplastischem Material, der mit einem Hals (1) mit einer im wesentlichen zylinderförmig umlaufenden Innenwand (2) versehen ist, dadurch gekennzeichnet, daß die Innenwand (2) des Halses (1) einen radialen Vorsprung (9) gemäß einem der Ansprüche 4 bis 11 umfaßt.

14. Dorn zum Halten eines Vorformlings oder eines Behälters aus thermoplastischem Material gemäß Anspruch 12 oder 13, wobei der Dorn (10) einen Dornkörper (11) umfaßt, der mit Rückhaltemitteln (13) versehen ist, die derart ausgebildet sind, daß sie positiv mit dem Hals (1) zusammenwirken, um diesen am Dornkörper (11) festzulegen, dadurch gekennzeichnet, daß die Rückhaltemittel (13) gemäß einem der Ansprüche 4 bis 6 ausgebildet sind, und daß ein fester Anschlag (14) vorgesehen ist, der gemäß einem der Ansprüche 4 bis 11 ausgebildet ist.

15. Anlage zum Transport von Vorformlingen oder Behältern aus thermoplastischem Material gemäß Anspruch 12 oder 13, ausgerüstet mit einer als Endloskette durchgehend mobilen Einrichtung aus Greiforganen für die Vorformlinge oder Behälter, die in Form von Dornen (10) vorliegen, dadurch gekennzeichnet, daß die Dorne gemäß Anspruch 14 ausgebildet sind.
